**Europäisches Patentamt**

**European Patent Office**

**Office européen des brevets**

(11) Veröffentlichungsnummer: **0 210 404 B1**

(12) **EUROPÄISCHE PATENTSCHRIFT**

(45) Veröffentlichungstag der Patentschrift:
26.07.89

(51) Int. Cl.⁴: **B 60 K 41/26**

(21) Anmeldenummer: **86108244.4**

(22) Anmeldetag: **16.06.86**

(54) Antriebsstrang für Kraftfahrzeuge.

(30) Priorität: **25.07.85 DE 3526671**

(43) Veröffentlichungstag der Anmeldung:
**04.02.87 Patentblatt 87/6**

(45) Bekanntmachung des Hinweises auf die Patenterteilung:
**26.07.89 Patentblatt 89/30**

(84) Benannte Vertragsstaaten:
**BE DE FR GB IT NL SE**

(56) Entgegenhaltungen:
EP-A- 0 059 426
EP-A- 0 073 475
EP-A- 0 108 572
EP-A- 0 123 083
WO-A-85/01256
DE-A- 2 811 574
DE-A- 2 927 707
DE-A- 2 933 075
DE-A- 3 101 477
DE-B- 2 334 786

Automotive Engineering, March 84, S.79
Bosch Technische Berichte 7 (1983) 4, S. 164, 165

(73) Patentinhaber: **M.A.N. Technologie GmbH, Dachauer Strasse 667, D-8000 München 50 (DE)**

(72) Erfinder: **Dreher, Gunther, Überlinger Weg 8, D-8000 München 60 (DE)**
Erfinder: **von Korff, Peter, Seestrasse 14, D-8084 Buch am Ammersee (DE)**

## Beschreibung

Die Erfindung betrifft ein Regel- und Steuersystem für einen Kraftfahrzeug-Antriebsstrang mit Merkmalen entsprechend dem Oberbegriff des Anspruches 1.

Die Erfindung geht aus von einem aus der DE-A-2 811 574 bekannten Regel- und Steuersystem. Dabei ist der Brennkraftmaschine zu deren Leistungsregelung eine eigene Motorelektronik und dem Getriebe zu dessen angepaßter Schaltung eine eigene Getriebeelektronik zugeordnet. Bei solchermaßen ausgerüsteten und elektronisch gesteuerten Fahrzeugen werden die den Wunsch des Fahrers an die Elektroniken übermittelnden Stellungen des Fahrpedals und Gangwahlorgans nicht unmittelbar an die Brennkraftmaschine bzw. das Getriebe weitergegeben, sondern zunächst den Elektroniken zugeführt, dort entsprechend verarbeitet und erst dann weitergeleitet als entsprechende Sollwertsignale. Mit den besagten Elektroniken ist es möglich, die (in konventionellen Systemen proportionale) Einwirkung der Bedienungselemente auf die Stellglieder, beispielsweise des Fahrpedals auf die Drosselklappe des Vergasers oder die Regelstange einer Einspritzpumpe, in gewissen Grenzen außerhalb der Proportionalität zu variieren. Mit dieser Art der Motorleistungs- und Getriebeschaltsbetriebsregelung läßt sich schon ein gewisser Komfort mit gegenüber konventionellen Systemen verbessertem Wirkungsgrad erreichen. Im übrigen sind diesen erreichbaren Werten insofern Grenzen gesetzt, weil äußere sich ändernde Einflüsse, die auf das Fahrzeug wirken und dessen Fahrbetrieb ganz wesentlich beeinflussen können, unberücksichtigt bleiben.

Des weiteren ist aus der GB-A-1 085 572 ein Regel- und Steuersystem mit einer einzigen Elektronik für die Steuerung von Motorleistung, Kupplung und Getriebeeinstellung bekannt. Auch dieses System berücksichtigt nur die üblichen Regelungsparameter und erscheint deshalb verbesserungsfähig.

Es ist daher Aufgabe der Erfindung, aufbauend auf einem Regel- und Steuersystem der eingangs genannten Art ein Konzept für die Regelung und Steuerung eines Kraftfahrzeug-Antriebsstranges zu schaffen, das fertigungstechnisch einfach realisierbar, hinsichtlich seiner Funktion flexibel und ausbaufähig ist und eine günstigere Einflußnahme auf die Antriebsstrangkomponenten bewirkt.

Diese Aufgabe wird erfindungsgemäß durch ein Regel- und Steuersystem mit den im Kennzeichen des Anspruches 1 angegebenen Merkmalen gelöst.

Die erfindungsgemäße Lösung besteht im einzelnen darin, daß der Motorelektronik und der Getriebeelektronik eine zusätzliche dritte Elektronik (Leitrechner) funktionell übergeordnet ist, die zur Optimierung des Betriebes des Antriebsstranges die Regelungsfunktionen der Motorelektronik und der Getriebeelektronik koordiniert. Diese dritte Elektronik (Leitrechner) errechnet auf der Basis von

— gespeicherten Kennlinien der Brennkraftmaschine, des Getriebes und der Bremsanlage,

— den elektrischen Steuersignalen wenigstens des Gas- bzw. Fahrpedals und des Bremspedals, und

— Betriebszustands-Istwerten der Komponenten des Antriebsstranges, nämlich Brennstoffeinspritzmenge, Getriebeeinstellung, Motordrehzahl, Getriebeabtriebsdrehzahl und diversen Druck- und Temperaturwerten,

unter Berücksichtigung von Bauart, Einsatzart und Beladung des Kraftfahrzeugs Sollwerte, die der Motorelektronik und Getriebeelektronik als übergeordnete Leitsignale für entsprechende Regelung der Komponenten des Antriebsstranges zugeführt werden.

Aufgrund dieser Lösung ist somit zwischen die Bedienungselemente, wie Fahrpedal, Bremspedal, Gangwahlorgan, und die aggregatspezifischen Elektroniken, wie Motorelektronik, Getriebeelektronik und dergleichen, eine weitere Elektronik (Leitrechner) geschaltet, wodurch die Grenzen der Betriebsoptimierung gegenüber den bisherigen elektronisch gesteuerten Fahrzeug-Antriebssträngen merklich erweitert werden können. Die Optimierung der Regelung und Steuerung des Antriebsstranges kann somit gleichzeitig unter Berücksichtigung der Wirtschaftlichkeit, des Wirkungsgrades und der Umweltbelastung geschehen, indem durch entsprechende Auslegung und Programmierung der Steuergeräte (Motorelektronik, Getriebeelektronik und dergleichen Elektronik) und der funktionell übergeordneten Elektronik (Leitrechner) die Komponenten des Antriebsstranges koordiniert angesteuert werden.

Der Erfindung liegt die Erkenntnis zugrunde, daß die Charakteristiken und/oder der Betrieb einer Komponente eines Antriebsstranges durch eine andere Komponente, sowie durch äußere Einflüsse (Gewicht, Temperatur, Geländebeschaffenheit usw.) beeinflußt oder verändert werden kann, und daß durch Berücksichtigung dieser Faktoren die Optimierung der Regelung und Steuerung eines Antriebsstranges weit ausbaufähig ist. Beispielsweise war es bisher nicht möglich, die Verbrennungsmaschine und das Getriebe in Abhängigkeit vom Betriebszustand des Antriebsstranges und gleichzeitig vom Außenumfeld zu steuern. Außenumfeld ist beispielsweise das Gelände (Bergfahrt, Autobahnfahrt, die Beladung des Fahrzeugs usw.).

Im folgenden ist die der Motorelektronik und Getriebeelektronik funktionell übergeordnete dritte Elektronik nur noch als Leitrechner bezeichnet.

Durch den Leitrechner ist nun die Möglichkeit gegeben, die über die Bedienungselemente (Fahrpedal, Bremspedal, Gangwahlorgan und dergleichen) übermittelten Fahrerwünsche so aufzuarbeiten, daß eine Verstellung der entsprechenden antriebsstrangseitigen Stellglieder nicht etwa den Bedienungselementen mehr oder weniger direkt folgt, sondern so erfolgt, daß dabei ein wirtschaftlicher und komfortabler, den Verschleiß und die Umwelt berücksichtigender Betrieb des Antriebsstranges bzw. des Fahrzeugs gegeben ist. Eine unkontrollierte Bedienungsweise der Pedale hat damit keine unkontrollierte Fahrweise (wenn die Lenkung außer Betracht gezogen wird) zur Folge. Die Wirkung eines sogenannten «Bleifußes» bleibt aus.

Es kann ferner durch entsprechende Programmierung des Leitrechners eine Tempostatfunktion unter Einbeziehung der Motor- und gleichzeitig Getriebesteuerung eingeschlossen werden. Damit kann die Einhaltung von Sollgeschwindigkeit auch am Berg oder Gefälle durchgeführt werden, indem zusätzlich Gangwechsel zur gegebenen Zeit automatisch vorgenommen werden. Durch die gleichzeitige und koordinierte Ansteuerung von Motor und Getriebe ist es ferner möglich, eine veränderte Momentenübersetzung im Getriebe beim Gangwechsel durch eine Anpassung des Motormomentes so zu berücksichtigen, daß ein Zugkraftausgleich erfolgt. Durch die koordinierte Ansteuerung werden außerdem unnötige Schaltungen (Hochschaltungen) vermieden.

Die Verwendung je einer autark arbeitenden Motorelektronik sowie Getriebeelektronik (elektronischer Regler) sichert die Funktionsfähigkeit des Fahrzeugs, bei Ausfall des Leitrechners, dem sie nur soweit funktionell unterlagert sind, als sie vom Leitrechner lediglich Sollwerte erhalten. Bei Ausfall eines vom Leitrechner zu errechnenden Sollwertes erhalten sie direkt das Bedienungselementsignal als Sollwert.

Die Elektroniken und der Leitrechner sind vorzugsweise getrennte Bauelemente; dadurch ist eine gute Anpassung an verschiedene Antriebssysteme möglich, indem die einzelnen Bauelemente entsprechend dem jeweiligen Anwendungsfall kombiniert werden können. Es müssen also nicht für jedes Konzept alle Steuergeräte (Elektroniken) und Elemente des Antriebsstranges geändert werden.

Der Leitrechner besteht bekannterweise im wesentlichen aus mindestens einer Signalaufbereitung, Eingabe-Ausgabeeinheiten sowie Speichereinheiten und einem Mikroprozessor. Die eingegebenen Signale der Bedienungselemente (Fahrpedal, Bremspedal, Gangwahlorgan und dergleichen) werden dabei aufbereitet und der Eingabeeinheit des Leitrechners zugeführt.

Gemäß einer weiteren Ausgestaltung der Erfindung wird zumindest ein Teil der aufbereiteten Signale gleichzeitig auch den Elektroniken (elektronischer Regler) zugeführt.

Auf die Weise ist sichergestellt, daß die eingegebenen Signale auch direkt auf andere Steuergeräte (Elektroniken) einwirken können, wenn der Leitrechner, insbesondere dessen Prozessor, ausfällt.

Im normalen Betrieb erhält der Leitrechner die Signale der Fahrpedalstellungen, sowie Istwerte wie Brennstoffzufuhrstellung, Getriebezustand, Bremsdruck und dergleichen, sowie weitere Meßwerte, wie Motordrehdrahl, Getriebeantriebsdrehzahl, die Pumpenstellungen und Druck eines hydraulischen Getriebes und gegebenenfalls die Beladung, Motortemperatur, Abgaswerte, usw. und verändert diese, global als Meßwerte bezeichneten Signale. Im Leitrechner werden ferner die Kennkurven der jeweiligen Verbrennungsmaschine sowie des Getriebes und der Bremsanlage gespeichert. Schließlich wird dem Leitrechner ein Programm eingegeben, mit dem unter Verwendung der Meßwerte, der eingespeicherten antriebsspezifischen Werte und einem Optimierungskriterium, Sollwertsignale für die Motorelektronik und Getriebeelektronik errechnet werden.

Diese zentral errechneten Sollwerte können somit auf den gesamten Antriebsstrang und das Fahrzeug abgestimmt werden, so daß für die Regelung der Brennstoffzufuhr zum Verbrennungsmotor beispielsweise nicht nur die motorspezifischen Daten und die vom Fahrer über das Fahrpedal vorgegebenen Führgrößen, sondern auch die Daten von anderen Antriebsstrangkomponenten sowie vom Außenumfeld in Betracht gezogen werden. Diese Daten können dann zur koordinierten Beeinflussung sämtlicher Komponenten des Antriebsstranges eingesetzt werden, so daß zwischen Wirkungsgrad, Abnutzungsminderung, Umweltschonung und Fahrkomfort eine alle diese Faktoren möglichst optimierende Steuerung der Antriebseinheit möglich ist.

Gemäß einer weiteren Ausgestaltung der Erfindung ist der Leitrechner so konzipiert, daß er zeitlich zurückliegende Meßwerte speichert und sie zur Ermittlung der aktuellen Betriebsart des Fahrzeugs verarbeitet. Aufgrund der vorangegangenen Fahrweise, z.B. weitgehend konstante Geschwindigkeit, was auf eine Fahrt auf einer Autobahn schließen läßt, oder stark unterbrochene Fahrten, die auf eine Fahrt innerhalb einer Stadt zurückzuführen sind, kann bei entsprechender Einprogrammierung des Leitrechners die momentane Betriebsart festgestellt und in die Ermittlung der Sollwerte mit einbezogen werden. Durch nur softwaremäßige Änderungen kann der Leitrechner und damit die ganze Steuergeräte-Gruppe auf unterschiedliche Fahrzeugbestimmungen, nämlich, Pkw oder Bus, Müllwagen oder Lkw eingestellt werden.

Im Antriebsstrang vorgesehene Sensoren erfassen den momentanen Zustand der Elemente des Antriebsstranges bzw. des Fahrzeugs. Die Istwert-Signale können vorzugsweise den entsprechenden Elektronikteilen zugeleitet werden, von wo aus sie an den Leitrechner weitergeleitet werden. Dieses hat den Vorteil, daß bereits bestehende Komponenten (Motor plus Motorelektronik, Getriebe plus Getriebeelektronik) unverändert in das erfindungsgemäße Antriebssystem integriert werden können. Hierbei wird beispielsweise die Stellung des Stellhebels für die Brennstoffeinspritzmenge der Motorelektronik als Einspritzmengen-Istwert zugeführt. In der Motorelektronik wird der Istwert mit einem vom Leitrechner angegebenen Sollwert verglichen und daraus das Stellsignal erzeugt, das auf das entsprechende Stellglied einwirkt.

Es ist aber auch möglich, die Istwerte dem Leitrechner einzugeben, und über diesen als aufbereitetes Signal an die Elektronik weiterzuleiten, wenn beispielsweise in einem neuen Antriebssystem alle Steuergeräte mit dem Leitrechner in einer Baueinheit integriert sind.

Das erfindungsgemäße Antriebssystem ist ausbaufähig, indem über den Leitrechner ein oder mehrere Zusatzelektroniken angesteuert werden können, wie z.B. eine Elektronik zur Regelung eines Energiespeichers oder des Bremssystems. Auf diese Weise können auch diese Funktionen mit den übrigen koordiniert gesteuert werden. Bei der Bremsanlage wird es zweckmäßig sein, daß das Bremspedal in üblicher Weise mechanisch/hydraulisch mit den Bremsen zusammenwirkt und gleichzeitig ein Signal für den Leitrechner erzeugt, der in Zusammenwirkung mit der Bremselektronik auf den Bremsvorgang einwirkt, um diesen günstig zu beeinflussen, z.B. ein Blockieren der Bremsen zu vermeiden. Mit einem derartigen Bremssystem kann unter Beibehaltung einer sicheren Bremstätigkeit auch der Bremsvorgang optimiert werden.

Die Erfindung ist nachfolgend anhand von in der Zeichnung schematisch dargestellten Ausführungsbeispielen näher erläutert.

Fig. 1 zeigt einen Antriebsstrang mit den Steuergeräten (Elektroniken) und den Bedienungselementen,

Fig. 2 zeigt ein detailliertes Schaltbild einer alternativen Lösung, und

Fig. 3 zeigt ein Motorkennfeld-Diagramm.

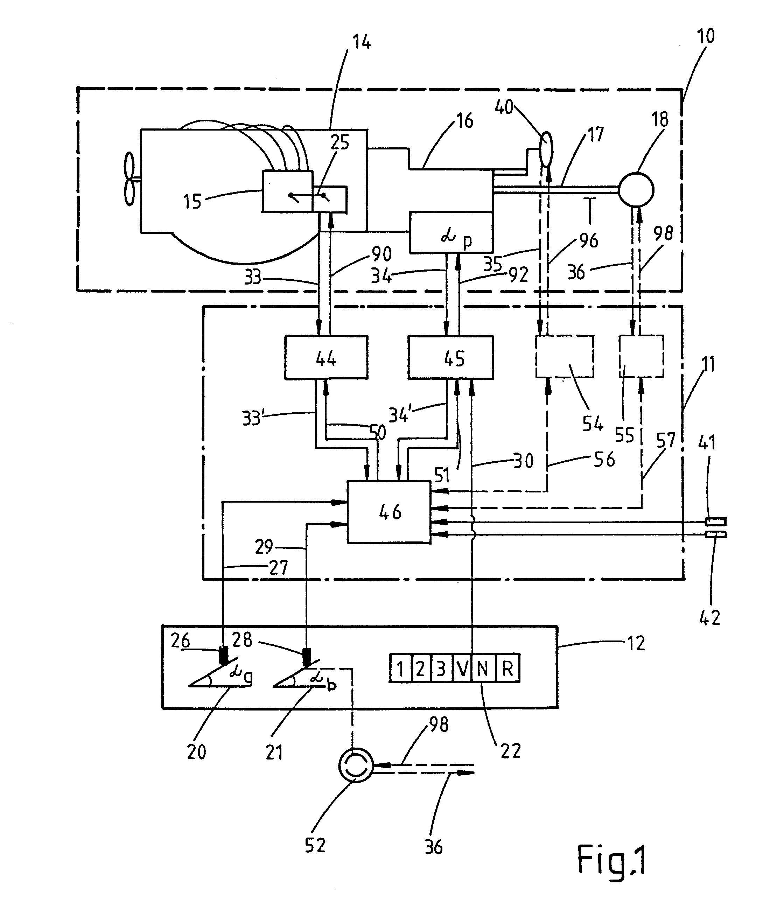

Das in Fig. 1 dargestellte Antriebssystem besteht aus einem Antriebsstrang 10, ferner den Komponenten des Antriebsstranges zugeordneten, im strichpunktierten Kasten 11 zusammengefaßten Steuergeräten sowie im Kasten 12 zusammengefaßten Bedienungselementen, die auf die Steuergeräte einwirken. Eine Verbrennungsmaschine 14 mit zugehörigem Brennstoffzufuhrsystem 15, ein Getriebe 16 mit zugehöriger Abtriebsachse 17 sowie die Antriebsradachse 18, ein Bremsenergiespeicher 40 und das Bremssystem 52 bilden den Antriebsstrang 10.

Zur Steuerung des Antriebsstranges 10 bedient sich der Fahrer wie üblich eines Fahrpedals 20, eines Bremspedals 21 und eines Schalthebels 22. Der Pedalweg bzw. Winkel $\alpha_g$, $\alpha_b$ wird jeweils von einem Wegsensor 26 bzw. 27 gemessen, die entsprechende Signale 28, 29 ausgeben.

Der Schalthebel 22 zeigt die jeweilig gewünschte Betriebsart (Vorwärts-, Rückwärtsfahrt V, R, Leerlauf N bzw. ebene, steigende, fallende Fart 1, 2, 3) über entsprechende Signale 30 an. Die Signale 27, 29, 30 stellen den Fahrwunsch des Fahrers dar. Ferner sind nicht näher dargestellte, dem Energiespeicher 40 und dem Bremssystem 52 zugeordnete Sensoren vorgesehen, die entsprechende Istsignale 33 bis 36 liefern.

Sensoren 41, 42 liefern weitere Meßwerte bzw. Fahrzeugdaten, wie z.B. Fahrbeschleunigung, Öldruck, Motortemperatur, Abgas, Fahrzeuggewicht, usw.

Im Grundaufbau bestehen die innerhalb der Umrandung 11 gezeichneten Steuergeräte aus einer Motorelektronik 44 zur Regelung der Brennstoffzufuhr für den Verbrennungsmotor 14, einer Getriebeelektronik 45 zur Regelung des Übersetzungsverhältnisses des Getriebes 16 sowie aus einem den beiden Elektronikteilen 44 und 45 funktionell übergeordneten Leitrechner 46, der aus den vorgenannten Meßwerten 27, 29, 41, 42, 33, 34 bzw. 33' und 34' Sollwerte 50 und 51 für die Motorelektronik 44 bzw. Getriebeelektronik 45 errechnet. Hierbei wirkt das Fahrpedal 20 im Fall von Fig. 1 ausschließlich auf den Leitrechner 46, während das Bremspedal 21 in üblicher Weise die Bremsen 52 betätigt und dabei zusätzlich das Signal 29 an den Leitrechner 46 abgibt.

Die Signale 30 des Gangschalters 22 werden direkt der Getriebeelektronik 45 eingegeben. Es ist aber auch möglich, dieses Signal 30 und das Bremspedalsignal 29 direkt dem Leitrechner 46 zuzuführen.

Die Steuergeräte (Elektroniken 44, 45) können ohne weiteres durch Zusatzelektroniken 54, 55 erweitert werden, die ebenfalls Sollsignale 56, 57 vom Leitrechner 46 empfangen und zur Steuerung weiterer Funktionseinheiten bzw. Elemente des Antriebsstranges 10 eingesetzt werden. So kann beispielsweise mit der Zusatzelektronik 54 der Energiespeicher 40 und mit der zweiten Zusatzelektronik 55 das Bremssystem gesteuert werden.

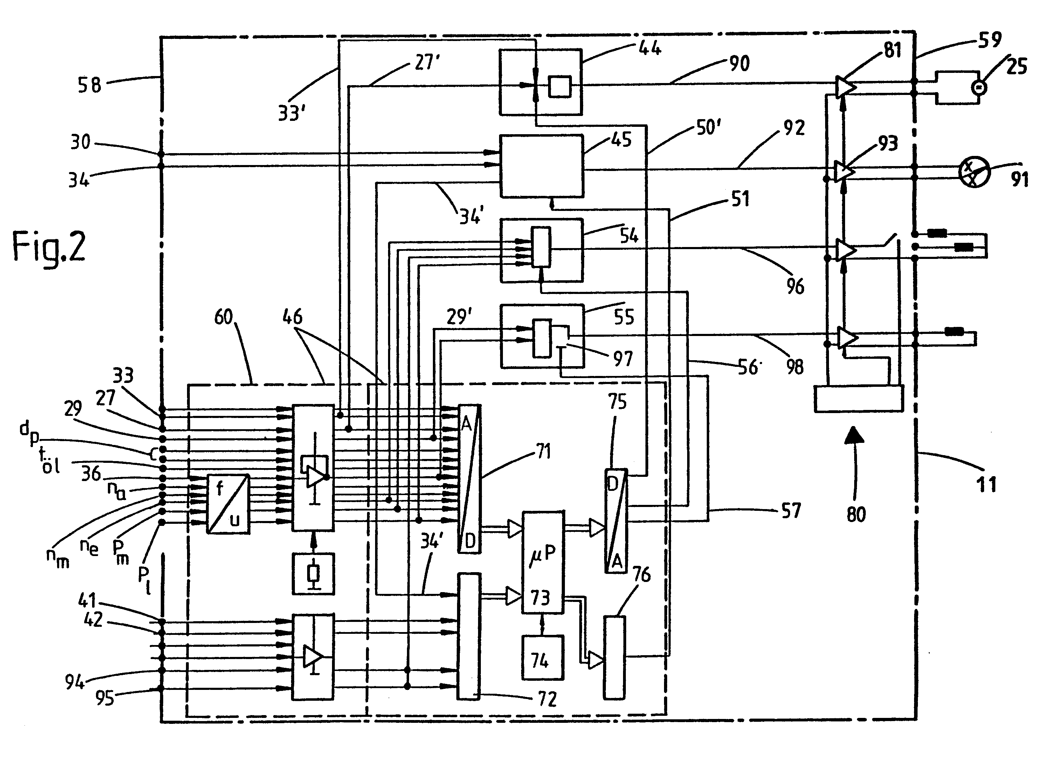

Fig. 2 zeigt ein Blockschaltbild der in einer Baueinheit 11 integrierten Steuergeräte (Elektroniken 44, 45, 46, 54, 55), die links mit einer Schnittstelle 58 für die Eingangssignale, also die Meßsignale, und an der rechten Seite mit einer Schnittstelle 59 für die Ausgangssignale, die den Antriebsstrang steuern, begrenzt ist.

Es ist natürlich auch möglich, die Steuergeräte (Elektroniken 44, 45, 46, 54, 55) als getrennte Baugruppen auszubilden, d.h. die Motorelektronik 44 sowie die Getriebeelektronik 45 und etwaige weitere Elektroniken 54, 55 und den Leitrechner 46 getrennt voneinander auszubilden und herzustellen und im Fahrzeug lediglich durch Signalzufuhrleitungen zu verbinden.

Der Leitrechner 46 (Fig. 2) besteht aus einer Signalaufbereitung 60 für die Meßwerte, einem Mikroprozessor 73, einem Speicher 74 sowie Eingabe-Ausgabeeinheiten 71, 72, 75 und 76. Im Ausführungsbeispiel sind in die Baueinheit 11 ferner die Zusatzelektroniken 54 und 55 sowie die Motorelektronik 44, die Getriebeelektronik 45 und zugehörige Leistungsteile 80 zur Ansteuerung der Stellglieder integriert. Im Speicher 74 werden die Kennlinien (Funktionen der Leistung, des Drehmoments und des Kraftstoffverbrauchs in Abhängigkeit der Motordrehzahl) der Verbrennungsmaschine 14, die Kennlinie für den optimalen Betrieb des Getriebes 16, sowie die Kennfelder etwaiger Antriebs-Betriebskomponenten gespeichert. Ferner werden auch die Meßdaten und Ausgangsdaten des Leitrechners 46 über eine vorbestimmte, unmittelbar zurückliegende Zeitspanne gespeichert.

Der Fahrerwunsch hinsichtlich der Fahrgeschwindigkeit wird durch die Fahrpedalstellung $\alpha_g$ und folglich dem entsprechenden Signal 27 in die Signalaufbereitung 60 eingeleitet. Das vom Wegsensor 26 gemessene Signal 27 wird in der Signalaufbereitung 60 nach einem in der Regelungstechnik bekannten Verfahren aufbereitet und in einem Analog/Digital-Wandler 71 für ein im Mikroprozessor 73 verarbeitbares Signal umgewandelt.

Das aufbereitete Signal 27' wird gleichzeitig auch direkt der Motorelektronik 44 als Sollwertvorgabe zugeleitet, während der Mikroprozessor 73 aus diesem Signal 27', dem Istwert 33 und weiteren Meßsignalen, nämlich Motordrehzahl $n_m$, Motoröltemperatur $t_{öl}$, Getriebestellung $\alpha_p$, Abtriebsdrehzahl $n_a$ des Getriebes 16, Außentemperatur, Abgaseigenschaften, etwaigen Energiespeicherdaten, sowie gespeicherten Daten, wie die Antriebskennfelder, ein Sollwert-Korrektursignal 50' ermittelt. Mit dem Sollwert-Korrektursignal 50' wird der durch das Fahrpedal 20 vorgegebene und aufbereitete Sollwert 27' im Hinblick auf einen optimalen Betrieb nicht nur der Verbrennungsmaschine 14, sondern des gesamten Antriebsstranges 10 modifiziert. Der modifizierte, d.h. optimierte Sollwert 50' für den Verstellwinkel des Brennstoffzufuhr-Stellglieds 25 wird in der Motorelektronik 44 mit dem gemessenen und aufbereiteten momentanen Istwert 33' verglichen, der dem momentanen Verstellwinkel des Brennstoffzufuhr-Stellglieds 25 entspricht. Mit dem Vergleichssignal, nämlich dem Stellsignal 90 für die Brennstoffzufuhr wird über einen Verstärker 81 der Leistungselektronik 80 schließlich des Stellglied 25 des Brennstoffzufuhrsystems 15 betätigt.

Bei dem Beispiel gemäß Fig. 2 wird das Istsignal 33 des Brennstoffzufuhrsystems 15 entgegen dem Beispiel nach Fig. 1 direkt dem Leitrechner 46 zugeführt, in dem das Istsignal 33 mit der ohnehin im Leitrechner 46 vorgesehenen Signalaufbereitung 60 aufbereitet und an den Mikroprozessor 73 sowie die Motorelektronik 44 weitergegeben werden kann, wodurch die Notfunktion bei Ausfall des Leitrechners 46 gewährleistet ist.

Wenn die Eingabe- oder Ausgabeeinheit 71, 72, 75, 76, der Mikroprozessor 73 oder der Datenspeicher 74 ausfällt, wird das Korrektursignal 50' nicht erzeugt. In so einem Fall entfällt eine Korrektur des vorgegebenen Sollwertes 27', der demzufolge ohne eine Modifizierung in der Motorelektronik 44 mit dem Istsignal 33' zur Erzeugung des Stellsignals 90 verglichen wird. Die Verbrennungsmaschine 14 wird daher in konventioneller Art weiterbetrieben.

Die Verbrennungsmaschinen-Regelung kann aber auch so erfolgen, daß die Sollwertkorrektur im Leitrechner 46 durchgeführt wird und daß direkt die Motorelektronik 44 das optimierte Sollsignal 50 erhält, wie es im Beispiel nach Fig. 1 vorgesehen ist. Bei einem Ausfall des Leitrechners 46 wird dann der unkorrigierte, vorgegebene Sollwert 27, 27' durchgegeben.

Für die Getriebeelektronik 45 wird mit dem Leitrechner 46 aus dem momentanen Zustand 34 ($\alpha_p$) (Istwert) der Hydrostaten 91 (Fig. 2) beispielsweise eines Hydrostatgetriebes 16, dem Fahrpedalsignal 27, der Kennfelder der Verbrennungsmaschine 14 und des Getriebes 16, des momentanen Übersetzungsverhältnisses, der Motordrehzahl $n_m$, der Fahrzeugbeladung, etwaigen Energiespeicherdaten, der mit dem Gangschalter 22 vorgewählten Betriebsart V, N, R, 1 ... ein Sollwert 51 errechnet, der für den momentanen Betriebszustand des Fahrzeugs den optimalen Gang des Getriebes 16 darstellt. Aus diesem Sollwert 51 und dem aufbereiteten Istwert 34' und unter Berücksichtigung der eingelegten Betriebsart 30 wird von der Getriebeelektronik 45 der entsprechende Gang eingelegt.

Über den Leitrechner 46 werden auf diese Weise die Informationen zwischen der Verbrennungsmaschine 14 und dem Getriebe 16 ausgetauscht, so daß bei der Steuerung der einen Komponente die andere Komponente mitberücksichtigt wird. Zudem können beliebige weitere Faktoren, die den Betrieb (Bremse, Temperatur/Abgas), das Fahrzeug selber (Beladung), oder Außenumstände (Wind) betreffen, in der Ermittlung der zu optimierenden Sollwerte ihre Berücksichtigung finden, um bei der Optimierung auch Gesichtspunkte, wie Komfort, Umweltbelastung einzuschließen.

Die Mindestausgestaltung der Steuergeräte-Baueinheit 11 enthält die bis hier beschriebenen Komponenten, nämlich den Leitrechner 46, die Motorelektronik 44 und Getriebeelektronik 45 sowie die Verknüpfung der Motor- und Getriebedaten bei der Ermittlung der jeweiligen Sollwerte.

Des weiteren sind dem System in bezug auf dessen Erweiterung mit weiteren Dateneingängen und Regelungselektroniken keine Grenzen gesetzt.

So kann beispielsweise eine Zusatzelektronik 54 angeschlossen werden, mit der ein Energiespeicher 40 unter Berücksichtigung der Motordrehzahl $n_m$, der Pedalstellungen $\alpha_g$, $\alpha_b$, des Betriebsart-Signals 30, der Abtriebs- und einer Nebenabtriebsdrehzahl $n_a$ bzw. $n_e$, sowie Kennlinien des Energiespeichers 40 gesteuert wird.

Auch ließe sich mit einer Zusatzelektronik die Kippeinrichtung eines Müllabfuhrwagens oder eines Lastwagens steuern, indem die entsprechenden Drucksignale $P_m$ bzw. $P_l$ der zugehörigen Hydraulikhebesysteme gemessen und unter Berücksichtigung von Signalen 94, 95 zugehöriger Betätigungselemente zu Steuersignalen 56 bzw. Stellsignalen 94 verarbeitet werden.

In einer Bremselektronik 55 ist ein Umschalter 97 vorgesehen, mit dem die Veränderung des Bremsdruckes entweder direkt proportional zum Bremspedalsignal 29 oder über einen durch den Leitrechner 46 ermittelten Sollwert 57 erfolgen kann. Der vom Leitrechner 46 ausgegebene Sollwert 57 wird unter Berücksichtigung der Fahrgeschwindigkeit, des eingelegten Ganges, dem Istwert (Bremsdruck) 36' der Bremspedalwirkung $\alpha_b$, sowie äußeren Umständen (Regen, Wind) ermittelt. In der Bremselektronik 55 wird aus dem Sollwert 57, dem Istwert 36' und dem Bremspedalsignal 29' das Stellsignal 98 für das Bremssystem 52 errechnet.

Die Regelelektroniken 44, 45, 54, 55 können nach den bisher bekannten Steuergeräten ausgebildet werden.

Der Leitrechner 46 wird danach so ausgestattet, daß er die Funktionsweise der jeweiligen Regelelektronik entsprechend mitberücksichtigt.

Der Leitrechner 46 wird in der Regel ein von den Regelelektroniken 44, 45, 54, 55 getrenntes Bauteil sein, das mit ausreichenden Eingängen sowie Ausgängen bestückt wird, um ein an alle möglichen Steuergerätekonzepte anpaßbares Universalgerät zu erhalten.

Durch entsprechende Speicherung von Daten und Funktionen und Programmierung des Leitrechners 46 wird die über die Möglichkeit der einzelnen Regelelektroniken hinausgehende Optimierung des Fahrverhaltens eines Fahrzeugs durchgeführt.

Die bisher bekannten Regelelektroniken haben gewisse Zusammenwirkungen, die zuvor bei den rein mechanisch/hydraulisch betriebenen Fahrzeugen vom Fahrer durchgeführt wurden, nicht mehr berücksichtigen können. Bei schweren Fahrzeugen ist es beispielsweise zweckmäßig, bei einer Gangschaltung Zwischengas zu geben. Dieses entfiel bei der Einführung einer Motorelektronik, da diese einen Gangwechsel nicht erkennen kann.

Dagegen sind nun alle diese und sogar noch zusätzliche Kooordinierungen bzw. Berücksichtigungen bei der Steuerung der einzelnen Elemente des Antriebsstranges möglich.

Der Leitrechner 46 erkennt, wenn eine Gangschaltung durchzuführen ist. Durch entsprechende Programmierung wird der Leitrechner 46 einen Sollwert 50 bzw. eine Sollwertkorrektur 51 ausgeben, die bei der Gangschaltung die Zugabe von Zwischengas veranlaßt. Dieser Programmteil wird allerdings nur für solche Fahrzeuge bzw. für die Gänge vorgesehen, bei denen Zwischengas erforderlich ist.

Ein weiteres Beispiel für die übergeordnete Koordinationswirkung durch den Leitrechner 46 ist die Erfüllung des Wunsches auf Konstanthaltung der Fahrgeschwindigkeit auch am Berg oder Gefälle. Hier ist entgegen einer Fahrt auf ebener Strecke nicht nur die Brennstoffzufuhr, sondern auch das Übersetzungsverhältnis des Getriebes zu ändern. Der Rechner wird anhand der Leistungskurve und des aktuellen Betriebszustandes der Verbrennungsmaschine 14 erkennen, wann ein Gangwechsel durchgeführt werden muß und gibt demzufolge zum entsprechenden Zeitpunkt Signal 51 zur Durchführung des Gangwechsels aus. Dem Leitrechner 46 kann also die Funktion eines Tempostanten einprogrammiert werden.

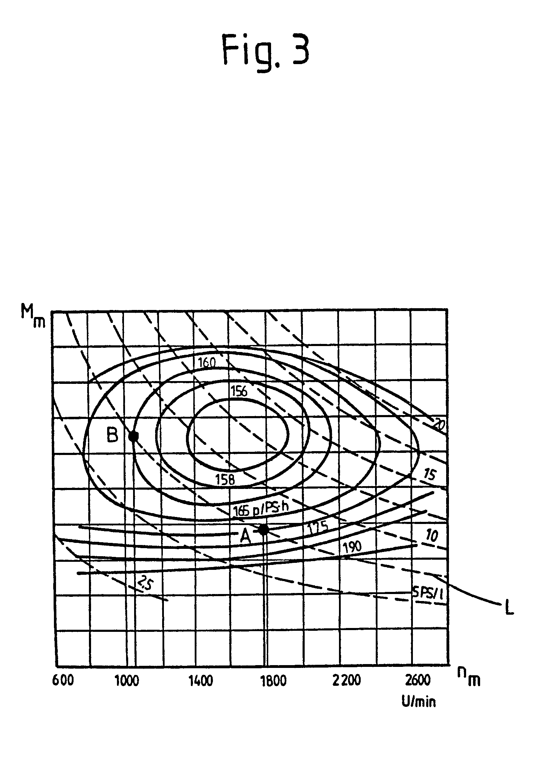

Bei der Optimierung der Steuerung des Motors 14 und des Getriebes 16 nach deren Wirkungsgraden und des Brennstoffverbrauchs wird der Leitrechner 46 beispielsweise bei einem eingelegten Gang x und der aktuellen Motorleistung L und Motordrehung $n_m$ aus dem Muscheldiagramm des Brennstoffverbrauchs, siehe Fig. 3, im Schnittpunkt A den Verbrauch ermitteln. Bevor der Leitrechner 46 einen Gangwechsel $x \pm 1$ veranlaßt, ermittelt er erst den Verbrauch bzw. Arbeitspunkt B, der sich durch einen Gangwechsel und der diesem folgenden Drehzahländerung entlang der Leistungslinie L ergibt. Ist dieser Punkt außerhalb eines möglichen Betriebes oder auf einer Muschellinie höheren Verbrauchs, so wird der Gangwechsel nicht durchgeführt.

Wenn der Punkt B, wie in Fig. 3, innerhalb eines möglichen Betriebs ist und auf einer Linie geringeren Verbrauchs, so ermittelt der Leitrechner 46 dann die aktuelle Beschleunigung. Ist diese sehr klein, so wird der Gangwechsel durchgeführt.

Bei großer Beschleunigung würde der Gangwechsel trotz günstigerem Verbrauch nicht durchgeführt werden, wenn kurz darauffolgend eine Rückschaltung zu erwarten ist.

Hierbei wird nicht nur der Brennstoffverbrauch optimiert, sondern es werden auch unnötige Schaltvorgänge (die oft bei Bergfahrten erfolgen) vermieden.

**Patentansprüche**

1. Regel- und Steuersystem für einen Kraftfahrzeug-Antriebsstrang, der aus einer Brennkraftmaschine (14), einem zugehörigen Getriebe (16) und einer Bremsanlage (42) besteht, mit Bedienungselementen, wie einem Gas- bzw. Fahrpedal (20), Gangwahlorgan (22), Bremspedal (21), deren Betätigung in elektrische Steuersignale umgesetzt wird, ferner mit einer Motorelektronik (44) zur Regelung des Brennkraftmaschinenbetriebes und mit einer von der Motorelektronik unabhängig wirkenden Getriebeelektronik (45) zur Regelung der Getriebeeinstellung, wobei Motorelektronik und Getriebeelektronik die Funktion des Antriebsstranges auf Basis der elektrischen Steuersignale besagter Bedienungselemente und von Betriebsdaten sowie von Kennkurven der Komponenten des Antriebsstranges regeln, dadurch gekennzeichnet, daß der Motorelektronik (44) und der Getriebeelektronik (45) eine zusätzliche dritte Elektronik (Leitrechner 46) funktionell übergeordnet ist, die zur Optimierung des Betriebes des Antriebsstranges die Regelungsfunktionen der Motorelektronik und der Getriebeelektronik koordiniert und korrigiert, wobei besagte dritte Elektronik (Leitrechner 46) auf der Basis von

— gespeicherten Kennlinien der Brennkraftmaschine, des Getriebes und der Bremsanlage,
— den elektrischen Steuersignalen wenigstens des Gas- bzw. Fahrpedals und des Bremspedals,
— Betriebszustands-Istwerten der Komponenten des Antriebsstranges, nämlich Brennstoffeinspritzmenge, Getriebeeinstellung, Motordrehzahl, Getriebeabtriebzahl und diversen Druck- und Temperaturwerten, und
unter Berücksichtigung von Bauart, Einsatzart und Beladung des Kraftfahrzeugs Sollwerte errechnet, die der Motorelektronik und Getriebeelektronik als übergeordnete Leitsignale für entsprechende Regelung der Komponenten des Antriebsstranges zugeführt werden.

2. Regel- und Steuersystem nach Anspruch 1, dadurch gekennzeichnet, daß Signale (27, 29), die die Stellung des Gas- bzw. Fahrpedals (20) und gegebenenfalls des Bremspedals (21) angeben, der dritten Elektronik (Leitrechner 46) zugeführt werden.

3. Regel- und Steuersystem nach Anspruch 1 oder 2, dadurch gekennzeichnet, daß die Signale (30) des Gangwahlorgans (22) über die Getriebeelektronik (45) der dritten Elektronik (Leitrechner 46) zuführbar sind.

4. Regel- und Steuersystem nach Anspruch 1, dadurch gekennzeichnet, daß die dritte Elektronik (Leitrechner 46) eine an sich bekannte Signalaufbereitung (60), mindestens je eine Eingabeeinheit (71, 72) und Ausgabeeinheit (75, 76), einen Speicher (74) sowie einen Mikroprozessor (73) aufweist, und daß zumindest ein Teil der aufbereiteten Signale (27', 34') der Eingabeeinheit (71, 72) sowie mindestens einer Elektronik (44,45) zuleitbar sind.

5. Regel- und Steuersystem nach einem der Ansprüche 1 bis 4, dadurch gekennzeichnet, daß die dritte Elektronik (Leitrechner 46) aus gespeicherten Kennlinien des Antriebsstranges (10), den Signalen (27, 29) der Bedienungselemente (20, 21), Istwerten des Antriebsstranges, wie die Brennstoffzufuhrstellung ($\alpha_g$), Getriebepumpenstellung ($\alpha_p$), und gegebenenfalls weiteren Meßdaten, wie Motordrehzahl ($n_m$), Getriebeantriebsdrehzahl ($n_a$), Öltemperatur, Beladung, Sollwerte (50, 51, 50', 51') für die Motor- und Getriebeelektronik (44 bzw. 45) errechnet.

6. Regel- und Steuersystem nach Anspruch 5, dadurch gekennzeichnet, daß die dritte Elektronik (Leitrechner 46) zeitlich zurückliegende Meßwerte speichert und zur Ermittlung der aktuellen Betriebsart des Fahrzeugs verarbeitet.

7. Regel- und Steuersystem nach Anspruch 6, dadurch gekennzeichnet, daß die aktuelle Betriebsart zur Beeinflussung der von der dritten Elektronik (Leit-

rechner 46) zu ermitteInden Sollwerte (50, 51, 50', 51') herangezogen wird.

8. Regel- und Steuersystem nach einem der vorhergehenden Ansprüche, dadurch gekennzeichnet, daß Zusatzelektroniken (54, 55) vorgesehen sind, die ebenfalls der dritten Elektronik (Leitrechner 46) funktionell untergeordnet sind.

9. Regel- und Steuersystem nach einem der vorhergehenden Ansprüche, dadurch gekennzeichnet, daß die für die Regelung des Antriebsstranges (10) notwendigen Istwerte (33 bis 36) zunächst jeweils den einzelnen Elektroniken (44, 45, 54, 55) zugeführt und von diesen dann an die dritte Elektronik (Leitrechner 46) weitergeleitet werden.

10. Regel- und Steuersystem nach einem der vorhergehenden Ansprüche, dadurch gekennzeichnet, daß die dritte Elektronik (Leitrechner 46) die Funktion eines Tempostaten einschließt, bei der die dritte Elektronik (Leitrechner 46) auf den Betrieb sowohl der Verbrennungsmaschine (14) als auch des Getriebes (16) koordinierend einwirkt.

11. Regel- und Steuersystem nach einem der vorhergehenden Ansprüche, dadurch gekennzeichnet, daß die von der dritten Elektronik (Leitrechner 46) ausgegebenen Sollsignale (51) für die Getriebeelektronik (45) nur dann die Anweisung einer Gangumschaltung enthalten, wenn es aufgrund des Betriebszustandes des Verbrennungsmotors (14) angebracht ist.

**Claims**

1. A regulating and control system for a motor vehicle drive line which consists of an internal combustion engine (14), an associated gearbox (16) and a brake system (52), with operating elements such as a throttle or riding pedal (20), gear selection device (22) brake pedal (21), the operation of which is converted to electrical control signals, and also with an electronic engine unit (44) for regulating the operation of the internal combustion engine and with an electronic gearbox unit (45) acting independently of the electronic engine unit to control the gearbox setting, electronic engine unit and electronic gearbox unit regulating the functioning of the drive line on a basis of the electrical control signals from the said operating elements and operational data as well as characteristic curves of the components of the drive line, characterised in that the electronic engine unit (44) and electronic gearbox unit (45) are functionally subordinate to a third electronic unit (guide computer 46) which to optimise operation of the drive line coordinates and corrects the regulating functions of the electronic engine and electronic gearbox units, the said third electronic unit (the guide computer 46), on a basis of

— stored characteristics of the internal combustion engine, the gearbox and the brake system,
— the electrical control signals of at least the accelerator or riding and the brake pedals,
— operating conditional actual values of the components of the drive line, namely fuel injection quantity, gearbox setting, engine speed, gearbox output coefficient and various pressure and temperature values, and
in consideration of type, nature of use and loading of the motor vehicle, calculates desired values which are fed to the electronic engine unit and electronic gearbox unit as superior guide signals for a corresponding control of the components of the drive line.

2. A regulating and control system according to Claim 1, characterised in that signals (27, 29) which indicate the position of the throttle or riding pedal (20) and possibly of the brake pedal are fed to the third electronic unit (guide computer 46).

3. A regulating and control system according to Claim 1 or 2, characterised in that the signals (30) from the gear selection means (22) can be fed via the electronic gearbox unit (45) to the third electronic unit (guide computer 46).

4. A regulating and control system according to Claim 1, characterised in that the third electronic unit (guide computer 46) comprises a per se known signal preparation unit (60), at least one input unit (71, 72) and output unit (75, 76), a memory (74) and a microprocessor (73), and in that at least a part of the prepared signals (27', 34') can be fed to the input unit (71, 72) and also to at least one electronic unit (44, 45).

5. A regulating and control system according to one of Claims 1 to 4, characterised in that the third electronic unit (guide computer 46) computes from stored characteristic curves of the drive line (10), the signals (27, 29) of the control elements (20, 21), actual values of the drive line, such as the fuel supply position ($\alpha_g$), gearbox pump position ($\alpha_p$) and possibly further measured data such as engine speed ($n_m$), gearbox output speed ($n_a$), oil temperature, load, desired values (50, 51, 50', 51') for the electronic engine and gearbox units (44 or 45).

6. A regulating and control system according to Claim 5, characterised in that the third electronic unit (guide computer 46) stores timewise delayed measured values processing them in order to ascertain the current nature of motor vehicle operation.

7. A regulating and control system according to Claim 6, characterised in that the current mode of operation is used in order to influence the desired values (50, 51, 50', 51') to be ascertained by the third electronic unit (guide computer 46).

8. A regulating and control system according to one of the preceding Claims, characterised in that additional electronics (54, 55) are provided which are likewise subordinate to the third electronic unit (guide computer 46).

9. A regulating and control system according to one of the preceding Claims, characterised in that the actual values (33 to 36) needed to control the drive line (10) are initially passed on to the individual electronic units (44, 45, 54, 55) from which they are then passed to the third electronic unit (guide computer 46).

10. A regulating and control system according to one of the preceding Claims, characterised in that the third electronic unit (guide computer 46) includes the function of a tempostat in which the third electronic unit (guide computer 46) acts on the operation both of the internal combustion engine (14) and also on that of the gearbox (16), in a co-ordinating sense.

11. A regulating and control system according to one of the preceding Claims, characterised in that the desired signals (51) given out by the third electronic unit (guide computer 46) and intended for the electronic gearbox unit (45) only obtain an instruction to change gear when it is appropriate by reason of the operating condition of the internal combustion engine (14).

## Revendications

1. Système de régulation et de commande pour une ligne d'entraînement de véhicule automobile, se composant d'un moteur à combustion interne (14), d'une transmission (16) lui étant affectée et d'une installation de freinage (52), avec des éléments de manoeuvres, tels qu'une pédale de gaz, ou d'accélérateur (20), d'un organe de sélection des vitesses (22), d'une pédale de frein (21), dont l'actionnement est converti en signaux de commande électriques, avec en outre une électronique de moteur (44) pour la régulation du fonctionnement du moteur à combustion interne et avec une électronique de transmission (45) agissant indépendamment de l'électronique du moteur, pour la régulation du réglage de la transmission, l'électronique de moteur et l'électronique de transmission réglant le fonctionnement de la ligne d'entraînement sur la base des signaux de commande électriques desdits éléments de manoeuvre et des données de fonctionnement ainsi que des courbes caractéristiques des composants de la ligne d'entraînement, caractérisé en ce qu'on prévoit une troisième électronique supplémentaire (ordinateur pilote 46) fonctionnellement supérieure à l'électronique de moteur (44) et l'électronique de transmission (45) et qui coordonne et corrige les fonctions de régulation de l'électronique de moteur et de l'électronique de transmission afin d'optimiser le fonctionnement de la ligne d'entraînement, ladite troisième électronique (ordinateur pilote 46) calculant des valeurs de consigne sur la base

— des courbes caractéristiques, mises en mémoire, du moteur à combustion interne, de la transmission et de l'installation de freinage,

— des signaux de commande électriques provenant au moins de la pédale de gaz ou d'accélérateur et de la pédale de frein,

— des valeurs réelles de l'état de fonctionnement des composants de la ligne d'entraînement, à savoir le débit injecté de carburant, le réglage de transmission, la vitesse de rotation du moteur, la vitesse de rotation de la sortie de la transmission et différentes valeurs de pression et de température, et

en prenant en considération le type de construction, le type d'utilisation et la charge du véhicule automobile, valeurs de consigne qui sont fournies à l'électronique du moteur et à l'électronique de transmission comme signaux pilotes d'ordres supérieurs pour la régulation correspondante des composants de la ligne d'entraînement.

2. Système de régulation et de commande selon la revendication 1, caractérisé en ce que des signaux (27, 29) indiquant la position de la pédale de gaz ou d'accélérateur (20) et, le cas échéant, de la pédale de freinage (21), sont alimentés à la troisième électronique (ordinateur pilote 46).

3. Système de régulation et de commande selon la revendication 1 ou 2, caractérisé en ce que les signaux (30) de l'organe de sélection de vitesse (22) sont susceptibles d'être alimentés à la troisième électronique (ordinateur pilote 46) par l'intermédiaire de l'électronique de transmission (45).

4. Système de régulation et de commande selon la revendication 1, caractérisé en ce que la troisième électronique (ordinateur pilote 46) présente un traitement du signal (60) connu en soi, au moins chacun d'une unité d'entrée (71, 72) et d'une unité de sortie (75, 76), d'une mémoire (74) ainsi que d'un microprocesseur (73) et en ce qu'au moins une partie des signaux traités (27', 34') sont susceptibles d'être dirigés vers l'unité d'entrée (71, 72) ainsi qu'au moins vers une électronique (44, 45).

5. Système de régulation et de commande selon l'une des revendications 1 à 4, caractérisé en ce qu'à partir des courbes caractéristiques, mises en mémoire, de la ligne d'entraînement (10), des signaux (27, 29) des éléments de manoeuvre (20, 21), des valeurs réelles de la ligne d'entraînement, comme la position d'alimentation en carburant $(\alpha_p)$, la position de pompe de transmission $(\alpha_p)$, et, le cas échéant, d'autres mesures, comme la vitesse de rotation du moteur $(n_m)$, la vitesse de sortie de la transmission $(n_a)$, la température d'huile, la charge, la troisième électronique (ordinateur pilote 46) calcule des valeurs de consigne (50, 51, 50', 51') pour l'électronique du moteur et de la transmission (44 et 45).

6. Système de régulation et de commande selon la revendication 5, caractérisé en ce que la troisième électronique (ordinateur pilote 46) met temporairement en mémoire et traite, pour déterminer le type de fonctionnement instantané, les valeurs qui lui sont ramenées.

7. Système de régulation et de commande selon la revendication 6, caractérisé en ce que le type de fonctionnement instantané est extrait pour influencer les valeurs de consignes (50, 51, 50', 51') à déterminer par la troisième électronique (ordinateur pilote 46).

8. Système de régulation et de commande selon l'une des revendications précédentes, caractérisé en ce que des électroniques supplémentaires (54, 55) sont prévues, également subordonnées à la troisième électronique (ordinateur pilote 46).

9. Système de régulation et de commande selon l'une des revendications précédentes, caractérisé en ce que les valeurs réelles (33 à 36) nécessaires à la régulation de la ligne d'entraînement (10) sont d'abord alimentées aux électroniques individuelles (44, 45, 54, 55) et retransmises de celles-ci à la troisième électronique (ordinateur pilote 46).

10. Système de régulation et de commande selon l'une des revendications précédentes, caractérisé en ce que la troisième électronique (ordinateur pilote 46) inclut la fonction d'un thermostat, pour lequel la troisième électronique (ordinateur pilote 46) agit en coordonnant sur le fonctionnement tant du moteur à combustion interne (14) qu'également de la transmission (16).

11. Système de régulation et de commande selon l'une des revendications précédentes, caractérisé en ce que les signaux de consigne (51) délivrés par la troisième électronique (ordinateur pilote 46) et destinés à l'électronique de transmission (45) ne contiennent l'indication d'un enclenchement de vitesse que si cela a été fourni par l'état de fonctionnement du moteur à combustion (14).

Fig.1

Fig.2

# Fig. 3